# EUROPEAN PATENT APPLICATION

(11) **EP 4 300 929 A1**
(43) Date of publication of application: **03.01.2024**
(21) Application number: 23182278.4
(22) Date of filing: 29.06.2023
(51) Int. Cl.: H04M 1/7243, H04M 1/22, H04M 19/04

(54) **NEW MESSAGE REMINDER METHOD AND ELECTRONIC DEVICE**

(30) Priority: 30.06.2022 CN 202210777331
(71) Applicant: Nothing Technology Limited, London EC2V 6EE (GB)
(72) Inventor: XU, Qi, Shenzhen City (CN); ZHU, Raymond, London (GB); LI, James, Shenzhen City (CN)
(74) Representative: EIP

(57) **Abstract**

The present disclosure provides a new message reminder method and an electronic device. The new message reminder method is applied to the electronic device. A back surface of the electronic device is provided with a light strip and a transparent cover. The transparent cover overall covers the back surface of the electronic device having the light strip. The method includes: receiving a new message; determining attribute information of the new message, the attribute information including at least one of ; determining a light reminder mode matching the attribute information, the light reminder mode including a light reminder mode in accordance with at least one of light duration, flashing frequency, light colour, light brightness and light area; and controlling the light strip to emit light in accordance with the determined light reminder mode so as to reminder the received new message.

## Description

### TECHNICAL FIELD

The present disclosure relates to fields of information technology and in particular to a new message reminder method and an electronic device.

### BACKGROUND

With the development of information technology, the way of people delivering information is becoming more and more convenient, but people's needs have increased from a basic need of ensuring a correctness of the information delivered and improving a speed of the information delivered to more diversified and personalised needs. At present, most of the information reminding ways are in the form of vibrating reminders and/or ringing reminders, so the reminders are relatively homogeneous and do not meet the diversified and personalised needs of users.

### SUMMARY

In order to solve the above technical problem, the present disclosure provides a new message reminder method and an electronic device.

A first aspect of the present disclosure provides a new message reminder method, applied to an electronic device. A light strip and a transparent cover are on a back surface of the electronic device. The transparent cover is capable of transmitting light emitted by the light strip. The method includes: receiving a new message; determining attribute information of the new message, the attribute information including at least one of source software, sender, and message type of the new message; determining a light reminder mode matching the attribute information, the light reminder mode including a mode for light reminder in accordance with at least one of light duration, flashing frequency, light colour, light brightness, and light area; and performing a light reminder for the received new message by controlling the light strip to emit light in accordance with the determined light reminder mode.

A second aspect of the present disclosure provides an electronic device. A light strip and a transparent cover are on a back surface of the electronic device. The transparent cover overall covers the back surface of the electronic device having the light strip. The electronic device includes a processor and a memory. The memory storing a computer program. The processor executes the computer program to perform the above mentioned new message reminder method.

In the present disclosure, in the case where a system default reminder method for new message is light reminder, or where a light reminder is set by the user to be a reminder method for new message, when a new message is received, a determination is made as to at least one attribute information of source software, sender and message type of the new message. After a determination is determined, a light reminder mode matched with the attribute information is obtained, and the light strip is controlled to light up in accordance with the determined light reminder mode. This helps the user to quickly understand some brief information of the new message and judge its importance. The user can further choose to view the new message immediately or later on the basis of this brief information.

### BRIEF DESCRIPTION OF THE ACCOMPANYING DRAWINGS

In order to illustrate the technical solution of the present disclosure more clearly, the following is a brief description of the accompanying drawings to be used in the embodiments. It is obvious that the accompanying drawings in the following description are some of the embodiments of the present disclosure. For a person of ordinary skill in the art, other accompanying drawings may be obtained on the basis of these drawings without any creative effort.
FIG. 1 is a structural schematic diagram of an electronic device in accordance with one embodiment of the present disclosure.
FIG. 2 a schematic diagram of some of circuit connections of the electronic device in accordance with one embodiment of the present disclosure.
FIG. 3 a flowchart of a new message reminder method in accordance with one embodiment of the present disclosure.

### DETAILED DESCRIPTION OF ILLUSTRATED EMBODIMENTS

The technical solutions in the embodiments of the present disclosure will be clearly and completely described below with reference to the accompanying drawings in the embodiments of the present disclosure. The embodiments described are only a part of the embodiments of the present disclosure; they are not all of them. Based on the embodiments in the present disclosure, all other embodiments obtained by a person of ordinary skill in the art without creative work shall fall within a protection scope of the present disclosure.

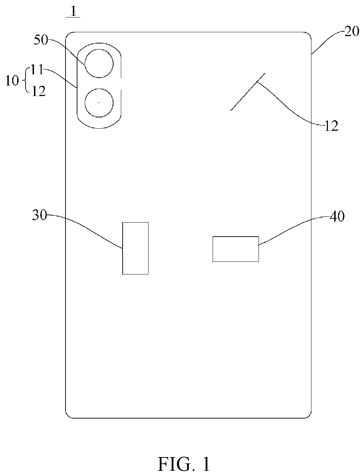

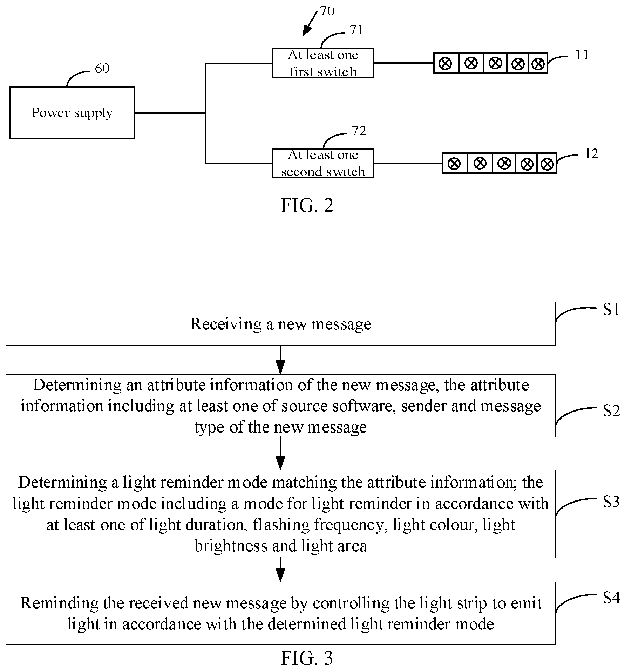

The electronic device 1 may be, but is not limited to, a mobile phone, a tablet, a computer, etc. The following description is taking an example of the electronic device 1 being a mobile phone. Referring to FIGS. 1 and 2, FIG. 1 is a structural schematic diagram of an electronic device in accordance with one embodiment of the present disclosure; FIG. 2 a schematic diagram of some of circuit connections of the electronic device in accordance with one embodiment of the present disclosure.

As shown in FIGS. 1 and 2, in one embodiment, the back surface of the electronic device 1 is provided with a light strip 10 and a transparent cover 20. The transparent cover 20 overall covers the back surface of the electronic device 1 having the light strip 10. The back surface is a surface opposite to a display screen (not shown) of the electronic device 1. The electronic device 1 includes a processor 30 and a memory 40. The memory 40 stores a computer program. The processor 30 executes the computer program to performing a new message reminder method.

In this embodiment, the light strip 10 is located inside of the electronic device 1. Since a transparent cover 20 is used, the light emitted by the light strip 10 can transmit through the transparent cover 20, providing for user with a novel and more individual structure. Due to the small internal space of the electronic device 1 and many electronic components accommodated in the small internal space, a more refined design is required to set the light strip 1 inside the electronic device 1 without affecting other electronic components. The electronic device 1 is provided with the light strip 10, and on the basis of such the structure, the electronic device 1 can offer more diverse play style. For example, the light strip can be applied to a new message reminder, so that the light reminder is added to the reminding method for the new message, as such, offering one of the options for diversification.

The processor 30 may include: a central processor (CPU) or a micro controller, etc. The memory 40 may include: a flash drive, a read-only memory, a random access device, a disk or a CD-ROM, etc.

Furthermore, the light strip 10 is located at a plurality of locations on the back surface of the electronic device 1. The plurality of locations includes a plurality of areas on a top portion of the electronic device. Specifically, a first light strip 11 of the light strip 10 is located in a top left area, i.e. around the camera module 50, and a second light strip 12 of the light strip 10 is located in a top right area.

Specifically, the electronic device 1 further includes a power supply 60, and a plurality of switches 70 located between the power supply 60 and the light strip 10. For example, at least one first switch 71 is located between the first light strip 11 and the power supply 60; the at least one first switch 71 is used to at least control the first light strip 11 to be conducted or not, that is , one first switch 71 is used to control the first light strip 12, or many first switches 71 each is used to control a part of the first light strip 12; at least one second switch 72 is located between the second light strip 12 and the power supply 60, and the at least one second switch 72 is used to at least control the second light strip 12 to be conducted or not, that is, one second switch 72 is used to control the second light strip 12, or many second switches 72 each is used to control a part of the second switch 72.

Referring to FIG. 3, FIG. 3 shows a flowchart of a new message reminder method in accordance with one embodiment of the present disclosure.

In the first embodiment, the new message reminder method is applied to the electronic device. The method includes following blocks.

Block S1: a new message is received.

Block S2: an attribute information of the new message is determined, the attribute information includes at least one of source software, sender, and message type of the new message.

Block S3: a light reminder mode matching the attribute information is determined; the light reminder mode includes a mode for light reminder in accordance with at least one of light duration, flashing frequency, light colour, light brightness, and light area.

Block S4: a reminder for the received new message is performed by controlling the light strip to emit light in accordance with the determined light reminder mode.

In this embodiment, in the case where a system default reminder method for new message is light reminder, or where a light reminder is set by the user to be a reminder method for new message, when a new message is received, a determination is made as to at least one attribute information of source software, sender and message type of the new message. After a determination is determined, a light reminder mode matched with the attribute information is obtained, and the light strip is controlled to light up in accordance with the determined light reminder mode. This helps the user to quickly understand some brief information of the new message and judge its importance. The user can further choose to view the new message immediately or later on the basis of this brief information.

Furthermore, in one embodiment, determining the light reminder mode matching the attribute information, further includes: detecting a screen state of the electronic device, the screen state including a screen-on state and a screen-off state; determining a light reminder mode matching the attribute information and the screen state.

An algorithm may be used to obtain a brightness of a screen to determine whether the screen state is the screen-on state or the screen-off state.

In this embodiment, it is necessary to combine the attribute information with the screen state to match the corresponding light reminder mode.

Furthermore, determining the light reminder mode matching the attribute information and the screen state, includes: when the screen state is the screen-on state and the source software of the new message is a telephone software, controlling the light strip to perform a light reminder at least in accordance with a light duration parameter and the light duration being greater than zero; when the screen state is a screen-off state, the source software of the new message is telephone software or other software, both controlling the light strip to perform a light reminder at least in accordance with a light duration parameter and the light duration being greater than zero.

In this embodiment, the system defaults the telephone software as important software, or the user sets the telephone software as important software, so that whether the electronic device is in the screen-off state or the screen-on state, when the telephone software has a new message (the new message of the telephone software is actually an incoming call), the light strip is controlled to perform a light reminder at least in accordance with the light duration parameter and the light duration is greater than zero; other software has a new message, the electronic device does not control the light strip to perform a light reminder at least in accordance with the light duration parameter and the light duration is greater than zero when the electronic device is in the screen-on state, but rather controls the light strip to perform a light reminder at least in accordance with a light duration parameter and the light duration is greater than zero when the electronic device is in the screen-off state.

Furthermore, the method further includes: detecting whether the electronic device is located on a flat surface and the transparent cover is facing the flat surface, and/or detecting whether the light strip of the electronic device is shielded (or blocked/covered); controlling the light strip to emit light in accordance with the determined the light reminder mode when the electronic device is located on the flat surface and the transparent cover is facing the flat surface, and/or the light strip of the electronic device is not shielded.

A distance sensor may be provided next to the light strip to detect whether the light strip is shielded, specifically, the distance sensor may be, but not limited to, an infrared sensor, a laser sensor, etc.. Hereinafter an infrared sensor is used as an example, the infrared distance sensor continuously emits infrared light in front at a preset frequency. When a light sensitive receiving tube of the infrared distance sensor does not receive reflected light, it means that the light strip is not shielded. When the light sensitive receiving tube of the infrared distance sensor receives reflected light, since the infrared distance sensor have different reflective intensities depending on the distance to the obstacle, the distance between the obstacle and the light source of the infrared distance sensor can be further determined in accordance with the intensity of the reflection. When the distance between the obstacle and the light source of the infrared distance sensor is greater than a preset distance value, then the light strip is not shielded. When the distance between the obstacle and the light source of the infrared distance sensor is less than or equal to the preset distance value, then the light strip is shielded.

It is detected whether the electronic device is located on a flat surface and the transparent cover is detected whether it is facing the flat surface. A rotation angle of the electronic device can be detected by a gyroscope sensor. When the electronic device is located on a flat surface and the screen of the electronic device is facing towards the user, the gyroscope sensor has a rotation angle of 0. When the detected rotation angle is within a preset rotation angle interval (e.g. 90° to 270°), the transparent cover is determined to be facing towards the flat surface. Preferably, when the detected rotation angle is within a preset rotation angle of 180°, the transparent cover is determined to be facing towards the flat surface.

In this embodiment, if the electronic device is not located on a flat surface, or is located on a flat surface but the transparent cover is not facing the flat surface, and/or if the light strip of the electronic device is detected to be shielded, the light strip is controlled not to emit light in order to avoid wasting electricity.

In one embodiment, in the new message reminder method, the determining the light reminder mode matching the attribute information, includes: obtaining a reminder ringtone set in advance for the new message corresponding to the attribute information; determining, in accordance with the reminder ringtone, a light reminder mode matching the attribute information of the new message.

In this embodiment, the user does not need to set the light reminder mode directly, but only needs to set the reminder ringtone and select the reminder ringtone for ringing, and the corresponding light reminder mode can be matched according to the reminder ringtone and the attribute information of the new message, this simplifies the setting procedure.

In a specific embodiment, the determining, in accordance with the reminder ringtone, a light reminder mode matching the attribute information of the new message, includes: when the reminder ringtone is a system customized ringtone, determining, in accordance with a correspondence between the reminder ringtone and the light reminder mode, the light reminder mode corresponding to the reminder ringtone to be a light reminder mode matching the attribute information of the new message.

In this embodiment, when the reminder ringtone pre-set for the attribute information of the new message is obtained as the system customized ringtone, since the system design process associates the customized ringtone with the light reminder mode, as long as the system customized ringtone is determined to be a specific ringtone, the light reminder mode can be determined as a specific light reminder mode. This way is relatively simple and easy to set up.

The reminder ringtone can be a default system customized ringtone or a user pre-defined system customized ringtone. For example, if the new message sender is a special contact for whom the user can pre-set the reminder ringtone to be a system customized ringtone A; at same time, if the new message sender is another contract for whom the user can pre-set the reminder ringtone to be a system customized ringtone B. Different system customized ringtones may be pre-set according to the source software for new messages. Different system customized ringtones may be pre-set according to the message type. Different system customized ringtones may be pre-set according to both the new message sender, the source software of the new message and the message type. For example, when the new message sender is a special contact, the source software of the new message is a basic communication software and the message type is a voice call, the reminder ringtone may set to be a system customized ringtone C.

In a specific alternative embodiment, the determining, in accordance with the reminder ringtone, a light reminder mode matching the attribute information of the new message, includes: when the reminder ringtone is a non-system customized ringtone, determining a light reminder mode matching the attribute information in accordance with audio attributes of the reminder ringtone.

In this embodiment, when the reminder ringtone pre-set for the attribute information corresponding to the new message is a non-system customized ringtone (e.g. a song fragment is selected as the reminder ringtone), an algorithm is required to extract the audio attributes (which can be lyric speed, volume, etc.) of the non-system customized ringtone. The algorithm then determines the light reminder mode in accordance with the audio attributes of the non-system customized ringtone. For example, the brightness of the light strip increases as the volume of the non-system customized ringtone increases, the brightness of the light strip decreases as the volume of the non-system customized ringtone decreases. For another example, the light strip blinks as fast or slow as the speed of the lyrics. Since the non-system customized ringtone is used, a more diverse and personalized ringtone can be selected to meet the diverse and personalized needs of the user.

The non-system customized ringtone can be a user pre-defined non-system customized ringtone. For example, if the new message sender is a special contact for whom the user can pre-set the reminder ringtone to be a non-system customized ringtone D (the song "Preference"); if the new message sender is another contract for whom the user can pre-set the reminder ringtone to non-system customized ringtone E (the song "Two Tigers"), etc. Different non-system customized ringtones may be preset according to the source software for new messages. Different non-system customized ringtones can be pre-set according to the message type. Different non-system customized ringtones may be pre-set according to both the new message sender, the source software of the new message and the message type. For example, when the new message sender is a special contact, the source software of the new message is a basic communication software and the message type is a voice call, the reminder ringtone may set to be a non-system customized ringtone F (the song "Sunny Day").

In one embodiment, the electronic device further includes a sound output unit and a vibrator, the method further includes: when system has switched on ringtone and/or vibration, determining a ringtone reminder mode and/or a vibration reminder mode matching the attribute information, the ringtone reminder mode including a mode for ringtone reminder in accordance with at least one parameter of reminder ringtone and ringing volume, the vibration reminder mode including a mode for vibration reminder in accordance with at least one parameter of vibration frequency and vibration amplitude; controlling the light strip to perform a reminder according to a determined light reminder mode while simultaneously controlling the sound output unit to perform a reminder according to a determined ringtone reminder mode and/or controlling the vibrator to perform a reminder according to a determined vibration reminder mode.

In this embodiment, when system has switched on ringtone and/or vibration, a ringtone reminder mode and/or a vibration reminder mode matching the attribute information is determined, and a light reminder mode matching the attribute information is determined, i.e., there is no correlation between the ringtone reminder mode and/or vibration reminder and light reminder mode. The ringtone reminder mode and/or vibration reminder mode matching the attribute information may be the system default or may be set by the user in advance; similarly, the light reminder mode matching the attribute information may be the system default or may be pre-set by the user.

In one embodiment, the determining the light reminder mode matching the attribute information, includes: obtaining a reminder ringtone set in advance for the attribute information corresponding to the new message; determining, in accordance with the reminder ringtone, a light reminder mode matching the attribute information of the new message.

In this embodiment, the user does not need to set the light reminder mode directly, but only needs to set the reminder ringtone and select the reminder ringtone for ringing, and the corresponding light reminder mode can be matched according to the reminder ringtone and the attribute information of the new message. This simplifies the setting procedure.

Furthermore, in a specific embodiment, the determining, in accordance with the reminder ringtone, a light reminder mode matching the attribute information of the new message, includes: when the reminder ringtone is a system customized ringtone, determining, in accordance with the correspondence between the reminder ringtone and the light reminder mode, the light reminder mode corresponding to the reminder ringtone to be a light reminder mode matching the attribute information of the new message.

In this embodiment, when the reminder ringtone pre-set for the attribute information of the new message is obtained as the system customized ringtone, since the system design process associates the customized ringtone with the light reminder mode, as long as the system customized ringtone is determined to be a specific ringtone, the light reminder mode can be determined as a specific light reminder mode. This way is relatively simple and easy to set up.

The reminder ringtone can be a default system customized ringtone or a user pre-defined system customized ringtone, for example, if the new message sender is a special contact for whom the user can pre-set the reminder ringtone to be a system customized ringtone A; at same time, if the new message sender is another contract for whom the user can pre-set the reminder ringtone to be a system customized ringtone B. Different system customized ringtones may be pre-set according to the source software for new messages. Different system customized ringtones may be pre-set according to the message type. Different system customized ringtones may be pre-set according to both the new message sender, the source software of the new message and the message type. For example, when the new message sender is a special contact, the source software of the new message is a basic communication software and the message type is a voice call, the reminder ringtone may set to be a system customized ringtone C.

Furthermore, in another specific embodiment, the determining, in accordance with the reminder ringtone, a light reminder mode matching the attribute information of the new message, includes: when the reminder ringtone is a non-system customized ringtone, determining a light reminder mode matching the attribute information in accordance with the audio attributes of the reminder ringtone.

In this embodiment, when the reminder ringtone pre-set for the attribute information corresponding to the new message is a non-system customized ringtone (e.g. a song fragment is selected as the reminder ringtone), an algorithm is required to extract the audio attributes (which can be lyric speed, volume, etc.) of the non-system customized ringtone. The algorithm then determines the light reminder mode in accordance with the audio attributes of the non-system customized ringtone, for example, the brightness of the light strip increases as the volume of the non-system customized ringtone increases, the brightness of the light strip decreases as the volume of the non-system customized ringtone decreases. For another example, the light strip blinks as fast or slow as the speed of the lyrics. Since a non-system customized ringtone is used, a more diverse and personalized ringtone can be selected to meet the diverse and personalized needs of the user.

The non-system customized ringtone can be a user pre-defined non-system customized ringtone. For example, if the new message sender is a special contact for whom the user can pre-set the reminder ringtone to be a non-system customized ringtone D (the song "Preference"); if the new message sender is another contract for whom the user can pre-set the reminder ringtone to be a non-system customized ringtone E (the song "Two Tigers"), etc. Different non-system customized ringtones may be pre-set according to the source software for new messages. Different non-system customized ringtones may be pre-set according to the message type. Different non-system customized ringtones may be pre-set according to both the new message sender, the source software of the new message and the message type. For example, when the new message sender is a special contact, the source software of the new message is a basic communication software and the message type is a voice call, the reminder ringtone may set to be a non-system customized ringtone F (the song "Sunny Day").

In an embodiment, the determining the light reminder mode matching the attribute information, further includes: obtaining a vibration frequency pre-set for the attribute information corresponding to the new message; determining the light reminder mode matching the attribute information of the new message in accordance with the vibration frequency. For example, after determining the vibration frequency matching the attribute information, determining a light flashing frequency matching the attribute information of the new message in accordance with the vibration frequency.

The vibration frequency matching the attribute information of the new message may be the system default or may be set by the user in advance.

In this embodiment, the user only needs to turn on the vibration reminder or after turning on the vibration reminder, the user needs to set the vibration frequency corresponding to the attribute information of the new message, without setting the light reminder mode matching the attribute information of the new message, simplifying the setting steps.

In one embodiment, the light strip is set in a plurality of areas of the back surface of the electronic device. Determining the light reminder mode matching the attribute information, includes: corresponding new message with different attribute information to different light reminder modes. The light reminder mode performs a reminder in accordance with at least one of a light area, a combination of light areas, and a light duration.

That is, a new message with different attribute information corresponds to a different light area, combination of light areas and/or light duration.

The different light areas are different light strips emitting light and/or different light beads in the same light strip emitting light. The combinations of different light areas are combinations of different light strips emitting light and/or combinations of different light beads in the same light strip emitting light.

The light area, combination of light areas and light duration are customised by the user, or can be selected as the system default.

In this embodiment, the new message with different attribute information can be reminded by different areas of light strips emitting light, or by different areas of light strips combined in different ways to emit light. The emitting light is either long or briefly lit and then extinguished. The same light strip is briefly lit and then extinguished to give a flashing light effect. The light strips in different areas are combined in different ways to give a reminder, and the light strips are briefly lit and then extinguished to give an effect of light strips alternately emitting light.

In one embodiment, the source software of each new message corresponds to a corresponding light reminder mode. Furthermore, the light reminder mode corresponding to the source software of at least one new message is different from the light reminder mode corresponding to the source software of the other new messages. that is, it is possible that the source software of the each new message corresponds to a different light reminder mode; it is also possible that a first type of different source software of the new message corresponds to a first light reminder mode, and a second type of different source software of the new message corresponds to a second light reminder mode, the first light reminder mode is different from the second light reminder mode.

Specifically, in one embodiment, the source software of the new message is categorized. Different categories of the source software of the new message correspond to different light reminder modes. The source software of the same category of the new message corresponds to the same light reminder mode. For example, the source software of new message is divided into basic communication software (including WeChat, QQ, phone, message, email and nail, etc.), entertainment software (including Tik Tok, Xiaohongshu, Bilibili and Weibo, etc.), shopping software (including Taobao, Jingdong, Pinduoduo and Dangdang, etc.), dating software (including Soul, Momo and TanTan, etc.) and other software. It should be understood that this classification is only an example. In some other embodiments other classifications may be used, such as simplifying the source software of the new message into important reminder software, normal reminder software and other software, or simplifying the source software of the new message into telephone software and other software, etc.

If the source software of the new message is divided into important reminder software, normal reminder software and other software, each corresponding to a different light reminder mode. In particular, the different light reminder modes can be based on only one of the parameters of light duration, flashing frequency, light colour, light brightness and light area; or they can be based on only a few different parameters and the same other parameters; or they can be based on all different parameters.

For example, when the value of only one parameter differs in different light reminder modes, and the parameter is the light duration, the following is an example of the first light reminder mode for important reminder software and the second light reminder mode for normal reminder software. If the new message comes from the important reminder software, the first light reminder mode corresponding to the important reminder software is: the light strip is lit for 45 seconds; if the user views the new message within 45 seconds, the light strip will go off without being lit for 45 seconds; if the user does not view the new message within 45 seconds, the light will automatically go off after 45 seconds. If the new message comes from the normal reminder software, the first light reminder mode corresponding to the normal reminder software is: the light strip is lit for 5 seconds, similarly; if the user views the new message within 5 seconds, the light strip will go off when the user views it without being lit for 5 seconds; if the user does not view the new message within 5 seconds, the light strip will go off after 5 seconds. It can be understood that the duration of the value is only an example, in other ways of implementation, the value can take other values. At the same time, the value of only one parameter differs in different light reminder modes, the parameter can also be the light colour (for example, the important reminder software corresponds to red, and the normal reminder software corresponds to white), or the light brightness (for example, the important reminder software corresponds to a maximum brightness, the normal reminder software corresponds to 50% of the maximum brightness brightness), or the light area (for example, the important reminder software corresponds to the first light strip in the light strip and the normal reminder software corresponds to the second light strip in the light strip), or the flashing frequency of the light when both flash (for example, the important reminder software corresponds to a flashing frequency of 30 flashes per minute and the normal reminder software corresponds to a flashing frequency of 0 flashes per minute, i.e. no flashing).

Another example, several parameters have different values for the different light reminder modes, while the other parameters have the same value. The different parameters can be light duration and flashing frequency. The following is also an example of the first light reminder mode for important reminder software and the second light reminder mode for normal reminder software. If the new message comes from the important reminder software, the first light reminder mode corresponding to the important reminder software is: the light strip can be lit for 45 seconds and blinks at a frequency of 30 times/minute; if the user views the new message within 45 seconds, the light strip will go off when the user views the new message without being lit for 45 seconds; if the user does not view the new message within 45 seconds, the light strip will automatically go off after 45 seconds. If the new message comes from the normal reminder software, the second light reminder mode corresponding to the normal reminder software is: the light strip can be lit for 15 seconds and blinks at a frequency of 0 times/minute; if the user views the new message within 15 seconds then light strip goes off when the user views it without being lit for 15 seconds; if the new message is not viewed by the user within 15 seconds, the light strip will automatically go off after 15 seconds. In this implementation, the duration value and the blinking frequency value are only examples, in other implementations, the value can take other values, and also can choose a combination of different parameters, here will not be repeated.

For example, the values of all parameters are different in different light reminder modes, the different parameters are light duration, light colour, light brightness, light area and flashing frequency. The following is also an example of the first light reminder mode for important reminder software and the second light reminder mode for normal reminder software. If the new message comes from the important reminder software, the first light reminder mode corresponding to the important reminder software is: the first light strip and the second light strip in the light strip are lit in red and at maximum brightness for 45 seconds, and blink at a frequency of 30 times/second; if the new message is viewed by the user within 45 seconds, the first light strip and the second light strip will go off when the user views the new message without being lit for 45 seconds; if the new message is not viewed by the user within 45 seconds, the first light strip and the second light strip will automatically go off after 45 seconds. If the new message comes from the normal reminder software, the second light reminder mode corresponding to the normal reminder software is: the third light strip in the light strip is lit in red and at 50% of the maximum brightness for 15 seconds and flashes at a frequency of 0 times/second (i.e. no flashing); if the new message is viewed by the user within 15 seconds, the third light strip will go off when the user views the new message without being lit for 15 seconds; if the new message is not viewed by the user within 15 seconds, the third light strip will go off automatically after 15 seconds. It can be understood that when selecting the position and/or number of light areas as different light reminder parameters, the selection needs to be made accordingly to the structure of the electronic device.

In an embodiment, the senders are divided into at least two groups. The at least two groups of senders each corresponds to a corresponding light reminder mode. Furthermore, the light reminder mode corresponding to at least one group of senders of the at least two groups is different from the light reminder mode corresponding to other groups of senders. It can be understood that the light reminder modes corresponding to each group of senders in the other groups of senders may all be different, or may only be partially the same, or may all be the same.

The senders can be contacts used in telephone and messaging software, friends in WeChat and QQ or even customer service and friends in public numbers and shopping software, followers and friends in entertainment software, etc.

Specifically, the sender can be classified. The user can select to use the system default classification method, user-defined classification method, or the system intelligent classification method. The system intelligent classification method specifically may be: by classifying the sender into close contacts, frequent contacts and other contacts, based on the frequency of contact between the user and the sender (here contacts are not only used in telephone and messaging software, but also in other software where the sender can be called a contact, and the same applies below), or by capturing the content of the chat with the sender and classifying them as family, colleagues, customers, etc. The users will mark those who need to see messages from this sender as special contacts as soon as they receive them, the other senders which are not marked will be normal contacts. Furthermore, the classification can be done across software, e.g. by associating contacts in other software than the software that the user has set not to associate with other software, e.g. if the user sets the sender as a special contact in WeChat when using the custom classification, the system synchronizes the sender in other software (e.g. QQ, phone book) as the special contact. Of course, the user can also not activate the cross-software classification method, but rather each software can be classified separately. When the system intelligent classification is enabled, the system will classify the sender as a close contact, a frequent contact and other contact based on the frequency of contact in each software, except for those software that the user has set not to be associated with other software. The classification is not precise enough. This is because some senders, although they have a high frequency of contact with users, do not use a fixed software to make contact and it is not precise enough to classify them only according to their frequency of contact in a particular software.

In a specific embodiment, the new message senders are divided into special contacts and other contacts. After receiving a new message, regardless of the software from which the new message originates and regardless of the type of message the new message belongs to, it is only necessary to determine the new message sender in the attribute information of the new message. When the sender of the new message is a special contact, the first light reminder mode in the above-mentioned embodiment is used to reminder receiving the new message. When the sender of the new message is an ordinary contact, the second light reminder mode in the above-mentioned embodiment is used to reminder receiving the new message.

In another specific embodiment, after receiving a new message, it is necessary to determine both the sender of the new message in the attribute information of the new message and the source software of the new message in the attribute information of the new message, and the two are combined to determine the light reminder mode. For example, the light reminder mode matching the new message sender as the special contact is flashing for 45 seconds; the light reminder mode matching the new message sender as another contact is lighting up for 45 seconds without flashing; the light reminder mode matching the new message source software as an important reminder software is lighting up in red, and the light reminder mode matching the new message source software as a normal reminder software is lighting up in white for reminder, and the two are combined as follows: if the new message is sent by a special contact from an important reminder software, then the light will flash in red for 45 seconds; if the new message is sent by a special contact from a normal reminder software, then the light will flash in white for 45 seconds; if the new message is sent by other contact from a normal reminder software, then the light will light up in white for 45 seconds; if the new message is sent by other contact from an important reminder software, then the light will light up in red for 45 seconds. It can be understood that the way in which the sender of the new message is classified, the way in which the software from which the new message originates is classified and the corresponding light reminder mode are only examples here and not limitations, alternatively, it may be also possible to determine the light reminder mode by combining the new message sender and message type in the attribute information of the new message; it may also be possible to determine the light reminder mode by combining the message type and the source software of the new message in the attribute information of the new message; it may also be possible to determine the light reminder mode by combining the new message sender, message type and the source software of the new message in the attribute information of the new message. The specific principles for determining the light reminder mode are the same as above and are not repeated here.

In an embodiment, the message types include voice calls, video calls, voice messages, video messages, text messages and picture messages. Each message type corresponds to a corresponding light reminder mode. Furthermore, the light reminder mode corresponding to at least one message type is different from the light reminder mode corresponding to the other message types. It can be understood that the light reminder corresponding to each of the other message types may be identical, only partially identical, or different altogether.

In a specific embodiment, when the message type is the voice call or the video call, the first light reminder mode in one of the above embodiments is used for reminding; when the message type is the voice message, video message, text message and picture message, the second light reminder mode in one of the above embodiments is used for reminding. It can be understood that in other embodiments, each different message type may also correspond to a different light reminder mode respectively.

The following clauses, define further statements of invention:
1. A new message reminder method, applied to an electronic device, a light strip and a transparent cover being on a back surface of the electronic device; the back surface being a surface opposite to a screen of the electronic device; the transparent cover overall covering the back surface of the electronic device having the light strip; wherein the method comprises: receiving a new message; determining attribute information of the new message, the attribute information comprising at least one of source software, sender and message type of the new message; determining a light reminder mode matching the attribute information, the light reminder mode comprising a mode for light reminder in accordance with at least one of light duration, flashing frequency, light colour, light brightness and light area; and reminding the received new message by controlling the light strip to emit light in accordance with the determined light reminder mode.
2.The new message reminder method according to clause 1, wherein the electronic device further comprises a screen; determining the light reminder mode matching the attribute information, further comprises: detecting a screen state of the electronic device, the screen state comprising a screen-on state and a screen-off state; determining a light reminder mode matching the attribute information and the screen state.
3.The new message reminder method according to clause 2, wherein determining the light reminder mode matching the attribute information and the screen state, comprises: controlling the light strip to perform a light reminder at least in accordance with a light duration parameter being greater than zero when the screen state is the screen-on state, wherein the source software of the new message is from a telephone software; both controlling the light strip to perform a light reminder at least in accordance with a light duration parameter and a light duration being greater than zero when the screen state is the screen-off state, wherein the source software of the new message is from a telephone software or other software.
4. The new message reminder method according to clause 1 or clause 2, wherein the method further comprises: detecting whether the electronic device is located on a flat surface and the transparent cover is facing towards the flat surface, and/or detecting the light strip of the electronic device is shielded or not shield; controlling the light strip to emit light in accordance with the determined light reminder mode when the electronic device is located on the flat surface and the transparent cover is facing towards the flat surface, and/or the light strip of the electronic device is not shielded.
5. The new message reminder method according to clause 1, wherein determining the light reminder mode matching the attribute information, comprises: obtaining a reminder ringtone set in advance for the new message corresponding to the attribute information; determining, in accordance with the reminder ringtone, a light reminder mode matching the attribute information of the new message.
6. The new message reminder method according to clause 5, wherein determining, in accordance with the reminder ringtone, a light reminder mode matching the attribute information of the new message, comprises: when the reminder ringtone is a system customized ringtone, determining, in accordance with a correspondence between reminder ringtones and light reminder modes, the light reminder mode corresponding to the reminder ringtone to be a light reminder mode matching the attribute information of the new message.
7. The new message reminder method according to clause 5, wherein determining, in accordance with the reminder ringtone, a light reminder mode matching the attribute information of the new message comprises:when the reminder ringtone is a non-system customized ringtone, determining a light reminder mode matching the attribute information in accordance with audio attributes of the reminder ringtone.
8. The new message reminder method according to clause 1, wherein the method further comprises: when system has switched on the ringtone and/or vibration, determining a ringtone reminder mode and/or a vibration reminder mode matching the attribute information, the ringtone reminder mode comprising a ringtone reminder mode in accordance with at least one parameter of reminder ringtone and ringing volume, the vibration reminder mode comprising a vibration reminder mode in accordance with at least one parameter of vibration frequency and vibration amplitude; controlling the light strip to perform a reminder according to the determined light reminder mode while simultaneously controlling the sound output unit to perform a reminder according to the determined ringtone reminder mode and/or controlling the vibrator to perform a reminder according to the determined vibration reminder mode.
9. The new message reminder method according to clause 1, wherein the method further comprises: obtaining a vibration frequency pre-set for the attribute information corresponding to the new message; determining a light reminder mode matching the attribute information of the new message in accordance with the vibration frequency.
10. The new message reminder method according to clause 1, wherein the light strip is set in a plurality of areas of the back surface of the electronic device, determining a light reminder mode matching the attribute information, comprises: corresponding new message with different attribute information to different light reminder mode, the light reminder mode being reminding in accordance with at least one of a light area, a combination of light areas, and a light duration.
11. The new message reminder method according to clause 10, wherein the light area, combination of light areas and light duration are customised by user.
12. The new message reminder method according to clause 1, wherein source software of each new message corresponds to a corresponding light reminder mode.
13. The new message reminder method according to clause 1, wherein the new message senders are divided into at least two groups, the at least two groups of senders each corresponds to a corresponding light reminder mode.
14. The new message reminder method according to clause 1, wherein the message types comprise voice calls, video calls, voice messages, video messages, text messages and picture messages; each message type corresponds to a corresponding light reminder mode.
15. An electronic device, wherein a back surface of the electronic device is provided with a light strip and a transparent cover; the transparent cover overall covers the back surface of the electronic device having the light strip; the electronic device further comprises a processor and a memory, the memory stores computer program, and the processor executes the computer program to perform the new message reminder method according to any one of clauses 1-14.

## Claims

1. A new message reminder method, applied to an electronic device, a light strip and a transparent cover being on a back surface of the electronic device; the back surface being a surface opposite to a screen of the electronic device; the transparent cover overall covering the back surface of the electronic device having the light strip; wherein the method comprises:
receiving a new message;
determining attribute information of the new message, the attribute information comprising at least one of: a source software, a sender, and a message type of the new message;
determining a light reminder mode matching the attribute information, the light reminder mode comprising a mode for a light reminder in accordance with at least one of: a light duration, a flashing frequency, a light colour, a light brightness, and a light area; and
perform the light reminder for the received new message by controlling the light strip to emit light in accordance with the determined light reminder mode.

2. The new message reminder method according to claim 1, wherein the electronic device further comprises a screen; and wherein determining the light reminder mode matching the attribute information further comprises:
detecting a screen state of the electronic device, the screen state comprising a screen-on state or a screen-off state;
determining a light reminder mode matching the attribute information and the screen state.

3. The new message reminder method according to claim 2, wherein determining the light reminder mode matching the attribute information and the screen state comprises:
(i) controlling the light strip to perform the light reminder at least in accordance with a light duration parameter being greater than zero when the screen state is the screen-on state, wherein the source software of the new message is from a telephone software; and/or
(ii) controlling the light strip to perform the light reminder at least in accordance with a light duration parameter being greater than zero when the screen state is the screen-off state, wherein the source software of the new message is from a telephone software or other software.

4. The new message reminder method according to any preceding claim, wherein the method further comprises:
detecting whether the electronic device is located on a flat surface and the transparent cover is facing towards the flat surface, and/or detecting whether the light strip of the electronic device is shielded or not shielded; and
controlling the light strip to emit light in accordance with the determined light reminder mode when the electronic device is located on the flat surface and the transparent cover is facing towards the flat surface, and/or the light strip of the electronic device is not shielded.

5. The new message reminder method according to any preceding claim, wherein determining the light reminder mode matching the attribute information comprises:
obtaining a reminder ringtone set in advance for the new message corresponding to the attribute information;
determining, in accordance with the reminder ringtone, the light reminder mode matching the attribute information of the new message.

6. The new message reminder method according to claim 5, wherein determining, in accordance with the reminder ringtone, a light reminder mode matching the attribute information of the new message, comprises:
when the reminder ringtone is a system customized ringtone, determining, in accordance with a correspondence between reminder ringtones and light reminder modes, the light reminder mode corresponding to the reminder ringtone to be a light reminder mode matching the attribute information of the new message.

7. The new message reminder method according to claim 5 or claim 6, wherein determining, in accordance with the reminder ringtone, a light reminder mode matching the attribute information of the new message comprises:
when the reminder ringtone is a non-system customized ringtone, determining the light reminder mode matching the attribute information in accordance with audio attributes of the reminder ringtone.

8. The new message reminder method according to any preceding claim, wherein the method further comprises:
when a system of the electronic device has switched on the ringtone and/or vibration, determining a ringtone reminder mode and/or a vibration reminder mode matching the attribute information, the ringtone reminder mode comprising a ringtone reminder mode in accordance with at least one parameter of: a reminder ringtone and a ringing volume; the vibration reminder mode comprising a vibration reminder mode in accordance with at least one parameter of: a vibration frequency and a vibration amplitude; and
controlling the light strip to perform the light reminder according to the determined light reminder mode while simultaneously controlling a sound output unit of the electronic device to perform a reminder according to the determined ringtone reminder mode and/or controlling a vibrator of the electronic device to perform a reminder according to the determined vibration reminder mode.

9. The new message reminder method according to any preceding claim, wherein the method further comprises:
obtaining a vibration frequency pre-set for the attribute information corresponding to the new message; and
determining the light reminder mode matching the attribute information of the new message in accordance with the vibration frequency.

10. The new message reminder method according to any preceding claim, wherein the light strip is set in a plurality of areas of the back surface of the electronic device, and wherein determining the light reminder mode matching the attribute information comprises:
associating different new messages having different attribute information to different light reminder modes, the different light reminder modes differing in accordance with at least one: of a light area, a combination of light areas, and a light duration.

11. The new message reminder method according to claim 10, wherein the light area, combination of light areas and light duration are customised by user.

12. The new message reminder method according to any preceding claim, wherein each source software corresponds to a respective light reminder mode.

13. The new message reminder method according to any preceding claim, wherein senders are divided into at least two groups of senders, and wherein each group of senders of the at least two groups of senders corresponds to a respective light reminder mode.

14. The new message reminder method according to any preceding claim, wherein the message types comprise voice calls, video calls, voice messages, video messages, text messages and picture messages; and wherein each message type corresponds to a respective light reminder mode.

15. An electronic device, wherein a back surface of the electronic device is provided with a light strip and a transparent cover; the transparent cover overall covers the back surface of the electronic device having the light strip; the electronic device further comprises a processor and a memory, the memory stores a computer program, and the processor is configured to execute the computer program to perform the new message reminder method according to any one of claims 1-14.
